# EUROPÄISCHE PATENTSCHRIFT

(11) **EP 1 007 287 B1**
(45) Veröffentlichungstag und Bekanntmachung des Hinweises auf die Patenterteilung: **26.06.2002**
(21) Anmeldenummer: 98907891.0
(22) Anmeldetag: 12.02.1998
(51) Int. Cl.: B25B 23/14, F16B 31/02

(54) **VERFAHREN UND VORRICHTUNG ZUM HERSTELLEN VON SCHRAUBVERBINDUNGEN**
METHOD AND DEVICE FOR PRODUCING SCREW ASSEMBLIES
PROCEDES ET DISPOSITIF POUR PRODUIRE DES ASSEMBLAGES PAR VIS

(30) Priorität: 12.02.1997 DE 19705346; 08.06.1997 DE 19723899
(43) Veröffentlichungstag der Anmeldung: 14.06.2000
(73) Patentinhaber: Löffler, Thomas, 83714 Miesbach (DE)
(72) Erfinder: Löffler, Thomas, 83714 Miesbach (DE)
(74) Vertreter: Kern, Gerbert
(86) Internationale Anmeldenummer: DE9800398
(87) Internationale Veröffentlichungsnummer: WO9835791

(56) Entgegenhaltungen:
- EP-A- 0 182 185
- DE-A- 2 022 079
- DE-A- 2 604 510
- DE-A- 2 714 377
- DE-A- 4 311 956
- FR-A- 1 512 090
- FR-A- 2 538 470
- GB-A- 961 621
- US-A- 2 562 831
- US-A- 3 943 819
- US-A- 4 569 229
- SOVIET PATENTS ABSTRACTS Section PQ, Week 9237 28.Oktober 1992 Derwent Publications Ltd., London, GB; Class P62, AN 92-307145 XP002068307 & SU 1 687 423 A (LENGD METAL WKS) , 30.Oktober 1991

## Beschreibung

Die Erfindung betrifft Verfahren und eine Vorrichtung zur Herstellung von Schraubverbindungen und kann bevorzugt bei Montageprozessen in der industriellen Produktion, im Werkstattbetrieb und zur Überwachung in der Anlagentechnik beim Vorliegen hoher Sicherheitserfordernisse eingesetzt werden.

Aus dem Stand der Technik ist bekannt, daß in der industriellen Produktion immer häufiger elektronisch gesteuerte Schraubsysteme eingesetzt werden. Diese weisen eine Antriebseinheit und eine Werkzeugspindel mit einem Schraubwerkzeug auf, das eine Schraube mit einem vorbestimmten Einschraubmoment anzieht, um die miteinander zu verbindenden Teile mit einer vorbestimmten Kraft aneinander zu pressen. Diese Kraft wird als Vorspannkraft bezeichnet und entsteht durch die Längenänderung des Schraubenschaftes, die nachfolgend als Längung bezeichnet wird. Es ist in vielen Anwendungsfällen notwendig, die Vorspannkraft möglichst genau auf einen vorbestimmten Wert einzustellen. Dazu ist es erforderlich, die Vorspannkraft zu bestimmen. Es ist aus Stand der Technik bekannt, die Vorspannkraft indirekt über die Messung des Einschraubmoments während des Einschraubens zu bestimmen. Zur Herstellung einer Schraubverbindung werden hauptsächlich Drehmoment- bzw. Drehwinkelmeßsysteme eingesetzt, die in das Schraubsystem integriert sind. Wenn beim Eindrehen der Schraube ein voreingestelltes Drehmoment erreicht ist, wird ein vom Drehmomentmeßsystem ausgegebenes Signal zur Abschaltung der Antriebseinheit verwendet oder die Schraube wird noch um einen vorbestimmten Drehwinkel weitergedreht, der durch das Drehwinkelmeßsystem bestimmt wird.

Bei der indirekten Bestimmung der Vorspannkraft durch die Drehmomentmessung treten folgende Probleme auf: Beim Anziehen einer Schraube kommt nur ein geringer Teil des aufgebrachten Drehmoments für die Längung der Schraube, d. h. für die Erzeugung der Vorspannkraft, zur Wirkung. Der größere Teil des Drehmoments wird durch die Reibung am Schraubengewinde und am Schraubenkopf aufgenommen. Ändern sich die Reibungsbedingungen, wirken sich diese Änderungen stark auf die Vorspannkraft aus. Daher können die vorstehend beschriebenen Vorrichtungen die Einhaltung enger Toleranzen der Vorspannkraft nicht gewährleisten.

Zur Überwindung dieser Schwierigkeiten ist es erforderlich, die Vorspannkraft direkt zu messen. Dazu sind verschiedene Verfahren und Vorrichtungen vorgeschlagen worden. So ist bekannt, unter dem Schraubenkopf einen Meßring in Form einer Unterlegscheibe anzuordnen. Dieser Meßring ist ein Sensor, der bei Krafteinwirkung ein elektrisches Signal abgibt. Wird die Schraube angezogen, drückt der Schraubenkopf auf den Meßring, wobei die Vorspannkraft direkt gemessen werden kann. Dieses Verfahren ist sehr kostenintensiv, da der Meßring nach dem Anziehen der Schraubverbindung unter dem Schraubenkopf verbleibt. Daher ist dieses Verfahren nur auf besondere Anwendungsfälle, wie z. B. die Raumfahrt oder die Kernenergietechnik, beschränkt. Eine kontinuierliche Langzeitüberwachung der Anpreßkraft ist mit Meßringen nur bedingt möglich, da diese eine unkontrollierbare Nullpunktdrift aufweisen

In der DE-A-4017726 wird eine Befestigungsschraube mit einem zumindest teilweise mit einem Gewinde versehenen Schaft und einem Betätigungsende beschrieben, an dem ein Kopf, ein Stiftansatz oder dgl. vorgesehen ist, wobei am Betätigungsende der Befestigungsschraube eine erste Endfläche und am freien Ende des Schafts eine zweite Endfläche ausgebildet sind, und an beiden Endflächen Meßflächen für eine Ultraschallmessung vorgesehen sind, die sich nur über einen Teil der Endflächen erstrecken und zu den Endflächen im Sinne einer Erhöhung und/oder Vertiefung axial versetzt angeordnet sind. Bei dieser Vorrichtung wird mittels Ultraschall die Längenänderung der Schraube gemessen. Aus den Materialkennwerten und den geometrischen Abmessungen der Schraube wird mittels dem Fachmann bekannter Verfahren die Vorspannkraft direkt ermittelt. Auf dem gleichen Prinzip basieren die Gegenstände der Patentanmeldungen DE-A-19507391 und DE-A-4025430. Die Bestimmung der Längenänderung der Schraube mittels Ultraschall weist jedoch auch Nachteile auf. Um die Längenänderung genau zu erfassen, muß der Ultraschall definiert in die Schraube eingeleitet werden. Die dabei zu lösenden technischen Probleme sind erheblich. So ist es erforderlich, die Schalleinleitungsfläche und die Reflexionsfläche besonders auszubilden. Weiterhin ist erforderlich, daß diese Flächen mit hoher Präzision gefertigt und eng toleriert sind. Normschrauben können diesen Ansprüchen nicht genügen. Schrauben werden mittels hocheffektiver Verfahren als Massenteile gefertigt. Für die Fertigung von Schrauben mit Ultraschalleinleitungsflächen stehen keine vergleichbaren Verfahren zur Verfügung. Daher sind die Fertigungskosten für diese Spezialschrauben beträchtlich.

In DE-A-2604510 werden Verfahren und Vorrichtungen zur Bestimmung der Klemmkraft mittels einer vom Schraubenkopf her axial in den Schraubenschaft reichende Bohrung und mittels einer in die Bohrung eingeführten Meßuhr Messung der Schraubenschaftdehnung beschrieben. Der Nachteil des Verfahrens besteht darin, daß eine berührende mechanische Messung für die Serienanwendung fehleranfällig und ungenau ist.

Ein dazu analoges Verfahren wir in EP-A-0182185 beschrieben. Darin ist eine Lochschraube mit eingepresstem Stift beschrieben, der sich beim Anziehen der Schraube in die Schraube bewegt und dessen Bewegung mechanisch gemessen wird.

SU-A-1687423 betrifft eine optische Messung zur Bestimmung der in einer Schraube vorhandenen Vorspannkraft. Diese bekannte Messung eignet sich nicht zur Steuerung eines Einschraubvorgangs

Die Aufgabe der Erfindung besteht darin, die Qualität bei der Herstellung von Schraubverbindungen zu verbessern und die vorstehend beschriebenen Probleme zu überwinden.

Die Aufgabe wird mit einer Vorrichtung nach Patentanspruch 1 und mit einem Verfahren nach Patentanspruch 5 gelöst.

Der Hauptvorteil der Vorrichtung besteht darin, daß ein mit der Vorspannkraft eng korrelierendes Meßsignal gewonnen wird, das nahezu frei von den Meßfehlern ist, die durch den Einfluß der Reibung im Gewinde bzw. am Schraubenkopf entstehen. Die Vorrichtung ist wahlweise zur Steuerung bzw. zur Regelung des Einschraubvorgangs einsetzbar. Es ist möglich, dieses Signal mit den bisher aus dem Stand der Technik bekannten Meßsignalen der Meßgrößen Drehmoment, Drehwinkel und/oder Einschraubtiefe zu kombinieren. Bei Bedarf ist es auch möglich, mehr als zwei Meßgrössen zu kombinieren.

Eine vorteilhafte Ausführungsart ist dadurch gekennzeichnet, daß ein in seiner Längserstreckung automatisch bewegbarer Stab vorgesehen ist, der in eine Meßposition und in eine Ruheposition bringbar ist. Am Vorderende des Stabes ist ein aktiver lichtoptischer Sensor eines berührungslos arbeitenden Meßsystems angeordnet. Der Stab und der Sensor sind so dimensioniert, um den Sensor in einem vorbestimmbaren Abstand zur Meßfläche zuhalten, der dem Meßbereich des Meßsystems entspricht, d.h. der Stab wird von seiner Ruheposition aus um einen vorbestimmten Weg in Richtung der Meßfläche ausgefahren, z. B. bis ca. 1 mm vor die Grundfläche der Sacklochbohrung. Der Sensor mißt die Strecke zwischen der Meßfläche des Sensors und der Grundfläche der der Sacklochbohrung. Die zu messende Gesamtlänge ergibt sich somit aus der Länge des vorbestimmten Weges und des gemessenen Abstands zwischen der Meßfläche des Sensors und der Grundfläche der Sacklochbohrung.

Der Vorteil der genannten Ausführungsart besteht darin, daß ein Meßverfahren bzw. eine Meßvorrichtung verwendet werden kann, die lediglich für sehr kleine Entfernungen geeignet ist. Diese Meßvorrichtungen sind besonders genau und zudem preisgünstig.

In Weiterbildung der Erfindung ist ein zweites Meßsystem vorgesehen, das mit dem ersten Meßsystem in fester Lagebeziehung steht, wobei mit dem zweiten Meßsystem ermittelt wird, welche Lageverschiebung das erste Meßsystem bezüglich des Schraubenkopfes erfährt, d. h. es wird festgestellt, ob der Schrauberkopf der Eindrehvorrichtung definiert auf dem Schraubenkopf sitzt. Wenn sich der Schrauberkopf durch mechanische Unzulänglichkeiten der Eindrehvorrichtung vom Schraubenkopf löst, wird diese Lageänderung von dem zweiten Meßsystem erfaßt, wobei ein Meßsignal erzeugt wird, daß zur Korrektur des Meßsignals des ersten Meßsystems verwendet wird. Demzufolge können Meßfehler, die durch Lageänderungen des ersten Messystems bezüglich des Schraubenkopf entstehen, eleminiert werden.

Die erfindungsgemäße Vorrichtung kann eine im Schraubwerkzeug eines Hand-Schraubers angeordneteMeßvorrichtung aufweisen. Diese Handschrauber können auch im Werkstattbetrieb zur Herstellung von Präzisionsschraubverbindungen eingesetzt werden.

Der Vorteil des erfindungsgemäßen Verfahrens liegt darin, daß optische Meßverfahren berührungslos und trägheitslos arbeiten. Dieses Verfahren kann z. B. dann angewendet werden, wenn starke mechanische Schwingungen an der Schraubverbindung den Einsatz von berührenden Meßverfahren nicht gestatten.

Vorteilhafte Weiterbildungen des erfindungsgemäßen Verfahrens sind Gegenstand von Unteransprüchen.

Eine solche Weiterbildung ist dadurch gekennzeichnet, daß die Herstellung der Schraubverbindung über die Messung des Drehwinkels oder/und des Drehmoments überwacht wird.

Der Vorteil dieses Verfahrens liegt darin, daß durch die Ermittlung der zusätzlichen Meßgrößen die Plausibilität der Bohrungsmessung überprüft werden kann, wodurch die Zuverlässigkeit des Verfahrens wesentlich erhöht wird.

Eine weitere Ausführungsart ist dadurch gekennzeichnet, daß die Schraubentemperatur gemessen wird, um Temperaturstörgrößen zu kompensieren.

Der Vorteil dieser Verfahrensweiterbildung liegt darin, daß Temperaturstörgrößen, die zu Materialdehnungen und somit zu Meßfehlem bei der Bohrungsmessung führen könnten, kompensiert werden. Dazu werden charakteristische, auf Temperaturänderungen zurückzuführende Meßfehler in Form von Meßreihen erfaßt und z. B. als Wertetabelle gespeichert. Zur Korrektur einer Längenmessung wird der aktuelle Längenmeßwert mit dem aktuellen Temperaturwert in Beziehung gesetzt und mittels herkömmlicher Korrekturalgorithmen der Temperaturfehler korrigiert. Dadurch wird die Qualität der Schraubverbindung verbessert.

Weitere Maßnahmen und Vorteile der Erfindung ergeben sich aus der nachfolgenden Beschreibung der Ausführungsbeispiele in Verbindung mit den beigefügten schematischen Zeichnungen.
- Fig. 1: zeigt eine erste Ausführungsform der erfindungsgemäßen Vorrichtung zur Herstellung einer Schraubverbindung.
- Fig. 2: zeigt schematisch eine zweite Ausführungsform der erfindungsgemäßen Vorrichtung zur Herstellung einer Schraubverbindung.
- Fig. 3: dient zur Erläuterung der bei der Herstellung der Schraubverbindung bestehenden Zusammenhänge.

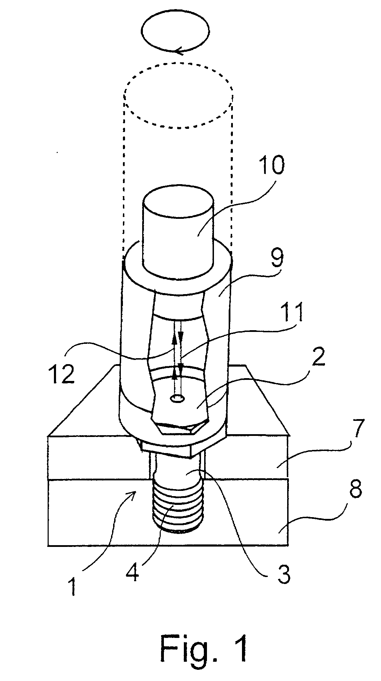

Fig. 1 zeigt eine erste Ausführungsform der erfindungsgemäßen Vorrichtung zur Herstellung einer Schraubverbindung. Zwei Bleche 7 und 8 werden mittels der Schraube 1 zusammengehalten. Der Schraubenkopf 2 wird mittels eines Schraubwerkzeugs 9 in Pfeilrichtung gedreht, um die Bleche 7 und 8 mit einer vorbestimmten Vorspannkraft gegeneinander zu pressen. Das Schraubwerkzeug 9 wird entweder automatisch oder von Hand gedreht. Im Schraubwerkzeug 9 ist ein sich mitdrehendes Miniatur-Interferometer 10 lagegenau angeordnet. Das Miniatur-Interferometer 10 sendet einen Lichtmeßstrahl 11 aus, der an der Bodenfläche 6 der Sackbohrung 5 reflektiert wird. Der reflektierte Lichtstrahl 12 wird von dem Miniatur-Interferometer 10 empfangen und als Abstandssignal zu einer Auswerteeinheit (nicht gezeigt) geführt. Der Fachmann weiß, daß der Abstand zwischen dem Miniatur-Interferometer 11 und der Oberfläche des Schraubenkopfes bekannt sein muß. Es hat sich als zweckmäßig erwiesen, diesen Abstand fest einzustellen, d. h. auf Null zu kalibrieren. Anschließend wird die Länge der Meßbohrung 5 im unbelasteten Zustand ermittelt. Beim Anziehen der Schraube kommt es zur Verlängerung der Meßbohrung 5, wobei die Längenänderungen online erfaßt und von einer Steuerelektronik in Steuersignale zur Steuerung des Antriebs der Einschraubvorrichtung umgewandelt werden.

Beim automatischen Eindrehen der Schraube wird der Einschraubvorgang gesteuert. Dazu sind in einer Steuer- und Speichereinheit Daten abgelegt, die einen optimierten Einschraubvorgang sicherstellen. So wird z. B. die Drehgeschwindigkeit so geregelt, daß sie zu Beginn des Einschraubvorganges höher ist als am Ende. Damit wird gewährleistet, daß der Schrauber zum richtigen Zeitpunkt abgeschaltet wird, um die vorgesehene Dehnung bzw. Anpreßkraft genau zu erreichen. In der Steuer- und Speichereinheit sind die Daten für unterschiedlichste Schraubverbindungen gespeichert.

Wird die Schraube von Hand eingedreht, kann z. B. über eine optische Analoganzeige dem Monteur die Vorspannkraft direkt angezeigt werden.

Als Meßvorrichtung für die Bohrung kommen vorzugsweise Miniatur-Interferometer zum Einsatz. Mit diesen Geräten können z. B. 500 mm mit einer Auflösung von 10 Nanometer vermessen werden. Die Sensorköpfe der Miniatur-Interferometer weisen die Größe eines Bleistiftes auf und können daher gut in eine Schraubspindel eines Automatikschraubers integriert werden.

Soll eine Schraubverbindung über längere Zeit überwacht werden, wird das Miniatur-Interferometer so mit dem Schraubenkopf 2 verbunden, daß ein lösbarer, stabiler und lagegenauer Aufbau erreicht wird. Die Art des Aufbaus muß der Fachmann an Hand der äußeren Randbedingungen auswählen.An Stelle eines Miniatur-Interferometers können auch andere optische Meßgeräte mit vergleichbaren Meßeigenschaften treten.

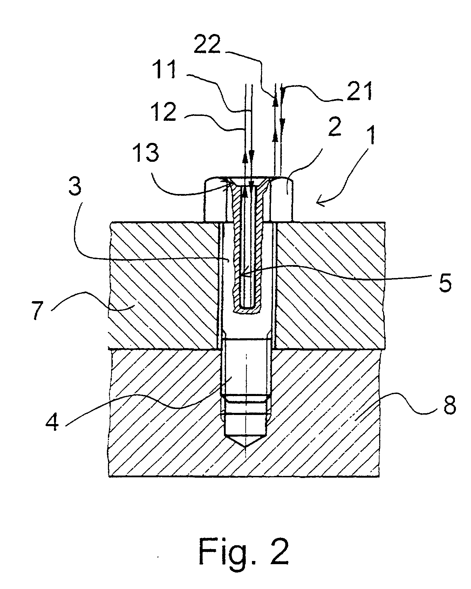

Die Fig. 2 zeigt schematisch eine zweite Ausfügsform der erfindungsgemäßen Vorrichtung zur Herstellung einer Schraubverbindung. Ein Referenzmeßgerät (nicht gezeigt) sendet einen Referenzmeßstrahl 21 auf die Oberfläche des Schraubenkopfes 2. Der reflektierte Strahl 22 wird von dem Referenzmeßgerät empfangen. Mit diesem zweiten Meßsystem wird ermittelt, welche Lageverschiebung das erste Meßsystem bezüglich des Schraubenkopfes 2 erfährt, d. h. es wird festgestellt, ob der Schrauberkopf 9 der Eindrehvorrichtung definiert auf dem Schraubenkopf 2 sitzt. Wenn sich der Schrauberkopf 9 vom Schraubenkopf 2 durch mechanische Unzulänglichkeiten der Eindrehvorrichtung abhebt, wird diese Lageänderung von dem Referenzmeßsystem erfaßt, wobei ein Meßsignal erzeugt wird, daß zur Korrektur des Meßsignals des ersten Meßsystems verwendet wird. Demzufolge können Meßfehler, die durch Lageänderungen des ersten Messystems bezüglich des Schraubenkopfs 2 entstehen, eleminiert werden.

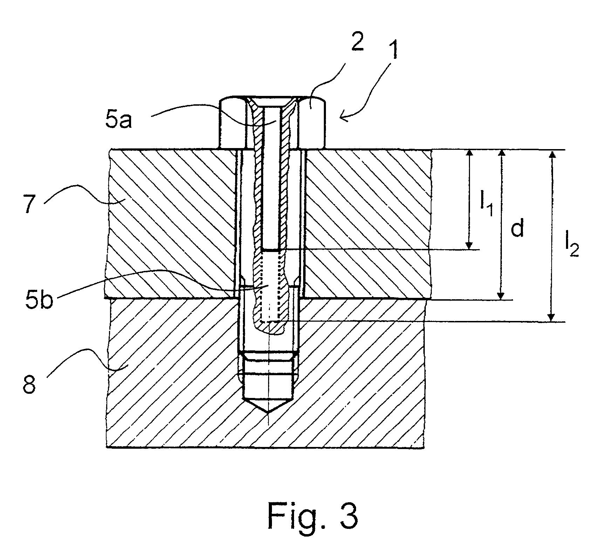

Die Fig. 3 dient zur Erläuterung der bei der Herstellung der Schraubverbindung bestehenden Zusammenhänge. Die Schraube 1 mit der Sackbohrung 5 (5a, 5b) verbindet die Bleche 7 und 8, wobei das Bleche 7 die Dicke d aufweist. In das Blech 8 ist der Gewindeabschnitt der Schraube eingeschraubt. Wenn die Schraube angezogen wird, dehnt sich der Schraubenschaft überwiegend im Bereich der Dicke d. Zur Optimierung der Meßgenauigkeit soll die Länge der Bohrung 5 so groß sein wie der tatsächliche Dehnabschnitt der Schraube, d. h. im vorliegendem Fall wäre es zweckmäßig, die Messung nur im Bereich der Dicke d vorzunehmen.

Es ist weiterhin wesentlich, daß die Bohrung nicht in den Gewindebereich der Schraube hinein ragt, da es dann zu einer unerwünschten Schwächung der Schraube kommt, ferner ist es möglich, über den Bohrungsdurchmesser den Querschnitt der Schraube zu verändern und damit gleichzeitig auch das Dehnverhalten vorbestimmt einzustellen. Wenn der Bohrungsdurchmesser groß ist, wird der Querschnitt der Schraube verringert. Diese Materialschwächung bewirkt eine stärkere Dehnung des Dehnbereichs der Schraube.

## Patentansprüche

1. Vorrichtung zur Herstellung einer Schraubverbindung, wobei mittels einer,
eine Sackbohrung **(5)** oder
eine Kembohrung
aufweisenden Schraube **(1),** die von einer Einschraubvorrichtung **(9)** eingedreht wird, zwei Bleche **(7, 8)** mit einer vorbestimmten Vorspannkraft aneinandergepreßt werden, wodurch der Schraubenschaft eine vorbestimmte Längenänderung erfährt, wobei die Vorrichtung aufweist:
- eine Meßvorrichtung, die
die Grundfläche **(6)** der Sackbohrung **(5)** oder
die Stirnfläche des Kerns
kontinuierlich abtastet, wobei Meßwerte über die aktuelle Länge
der Sackbohrung **(5)** oder
der Kernbohrung
kontinuierlich erfaßbar sind,
- eine elektronische Datenumwandlungs- und verarbeitungseinheit, die die Meßwerte in elektrische Signale umwandelt und weiterverarbeitet und
- eine Steuereinrichtung, die eine Einschraubvorrichtung **(9)** in Abhängigkeit von den Meßwerten und vorbestimmten Vergleichswerten steuert, **dadurch gekennzeichnet, daß**
- die Meßvorrichtung so ausgebildet ist, um einen
auf die Grundfläche **(6)** der Sackbohrung **(5)** oder
auf die Stirnfläche des Kerns
gerichteten Meßlichstrahl **(11)** zu erzeugen, der
von der Grundfläche **(6)** oder
von der Stirnfläche
rekflektiert wird und von der Meßvorrichtung empfangbar ist, wobei von der Datenumwandlungs- und Verarbeitungseinheit elektrische Meßsignale erzeugbar sind, die der Steuereinrichtung zugeführt werden.

2. Vorrichtung nach Anspruch 1, **dadurch gekennzeichnet, daß** ein in seiner Längserstreckung automatisch bewegbarer Stab vorgesehen ist, der in eine Meßposition und in eine Ruheposition bringbar ist, wobei am Vorderende des Stabes ein aktiver lichtoptischen Sensor zur Längenmessung oder Abstandsmessung angeordnet ist und der Stab mit dem Sensor so dimensioniert ist, um in der Meßposition den Sensor in einem vorbestimmbaren Abstand zur Meßfläche zu halten, der dem Meßbereich des Meßsystems entspricht.

3. Vorrichtung nach einem der Ansprüche 1 bis 2, **dadurch gekennzeichnet, daß** ein zweites Meßsystem vorgesehen ist, das mit dem ersten Meßsystem in fester Lagebeziehung steht, wobei mit dem zweiten Meßsystem ermittelt wird, welche Lageverschiebung das erste Meßsystem bezüglich des Schraubenkopfes **(2)** erfährt.

4. Vorrichtung nach wenigstens einem der Ansprüche 1 bis 3, **dadurch gekennzeichnet, daß** die Meßvorrichtung im Schraubwerkzeug eines Hand-Schraubers angeordnet ist.

5. Verfahren zur Herstellung einer Schraubverbindung, wobei mittels einer Schraube **(1),** die von einer Einschraubvorrichtung **(9)** eingedreht wird, zwei Bleche **(7, 8)** mit einer vorbestimmten Vorspannkraft aneinandergepreßt werden, wodurch der Schraubenschaft eine vorbestimmte Längenänderung erfährt, wobei folgende Verfahrensschritte ausgeführt werden:
- Aufsetzen der ein Meßsystem aufweisenden Einschraubvorrichtung **(9)** auf den Kopf **(2)** der Schraube **(1),**
- Bestimmen
eines Längenmeßwertes einer längs der Schraubenachse verlaufenden Sackbohrung **(5)** der Schraube **(1),** oder
eines Abstandsmeßwertes eines in, längs der Schraubenachse verlaufenden Kernbohrung der Schraube **(1)** vornandenen Kerns einer
wobei
der Längenmeßwert aus Richtung des Schraubenkopfes **(2)** und zu einem Zeitpunkt bestimmt wird, zu dem noch keine Längenänderung des Schraubenschaftes eingetreten ist, oder
der Abstandsmeßwert aus Richtung des Schraubenkopfes **(2)** bezogen auf die Stirnfläche des Kerns bestimmt wird und die Bestimmung zu einem Zeitpunkt erfolgt, zu dem noch keine Längenänderung des Schraubenschaftes eingetreten ist,
- kontinuierliches Erfassen der aktuellen Längen- bzw. Abstandsmeßwerte während eines aktuellen Einschraubvorgangs und
- kontinuierliches Vergleichen der erfaßten, während des aktuellen Einschraubvorgangs auftretenden Änderungen der Längen- bzw. Abstandsmeßwerte mit vorbestimmten Daten, wobei
- nach vorbestimmten Kriterien ermittelt wird, ob der Einschraubvorgang funktionsgemäß verläuft, und wann der Einschraubvorgang abzuschließen ist,
**dadurch gekennzeichnet, daß**
der Längenmeßwert oder
der Abstandsmeßwert
durch optische Messung bestimmt wird, wobei ein von einer Lichtquelle ausgesendeter Meßlichtstrahl **(11)**
an dem Bohrungsgrund **(6)** der Sackbohrung **(5)** reflektiert wird oder
an der Stirnfläche des Kerns reflektiert wird
und der reflektierte Strahl **(12)** von einer Strahlerfassungseinheit erfaßt wird und von einer Auswerteeinheit die Verschiebung
des Bohrungsgrundes **(6)** oder
der Stirnfläche des Kerns
bestimmt wird.

6. Verfahren nach Patentanspruch 5, **dadurch gekennzeichnet, daß** die Herstellung der Schraubverbindung zusätzlich über die Messung des Drehwinkels oder/und über das Drehmoment überwacht wird.

7. Verfahren nach den Patentansprüchen 5 bis 6, **dadurch gekennzeichnet, daß** die Schraubentemperatur gemessen wird, um Temperaturstörgrößen zu kompensieren.

## Claims

1. A device for producing a screw connection, whereby by means of a screw (1) comprising a pocket bore (5) or a core bore and being rotated by a screw-in mechanism (9), two sheets (7, 8) are pressed together by a predetermined prestress force, by means of which the screw shank undergoes a predetermined change in length, and whereby the device comprises:
- a measuring device which continuously scans the base surface (6) of the pocket bore (5) or the front face of the core, whereby measuring values relating to the current length of the pocket bore (5) or the core bore can be continuously recorded,
- an electronic data conversion and processing unit which converts the measuring values into electronic signals and processes them further, and
- a control device which controls the screw-in mechanism (9) depending on the measuring values and predetermined comparative values, **characterised in that**
- the measuring device is designed so as to generate a measuring light beam (11) directed to the base surface (6) of the pocket bore (5) or to the front face of the core, which measuring light beam is reflected by the base surface (6) or by the front face and is detectable by the measuring device, whereby electrical measuring signals can be generated by the electronic data conversion and processing unit which electrical measuring signals are forwarded to the control unit.

2. A device as claimed in claim 1, **characterised in that** in its longitudinal extension an automatically movable rod is provided which can be brought into a measuring position and into an idle position, whereby an active optical light processing sensor of a measuring system for measuring length and distances is arranged at the front end of the rod, and that the rod and the sensor are of such a size as to keep the sensor at a predetermined distance from the measuring surface, corresponding to the measuring area of the measuring system.

3. A device as claimed in either one of claims 1 and 2, **characterised in that** a second measuring system is provided which is in determined relation, as to positions, to the first measuring system, whereby the second measuring system records any position displacement of the first measuring system with respect to the screw head (2).

4. A device as claimed in at least one of claims 1 to 3, **characterised in that** the measuring device is arranged in the screw tool of a manual screwdriver.

5. A process for producing a screw connection, in which by means of a screw (1) rotated by a screw-in mechanism (9), two sheets (7, 8) are pressed together by a predetermined prestress force, whereby the screw shank undergoes a predetermined change in length, the process in which following procedural steps are carried out:
- placing the screw-in mechanism (9) which comprises a measuring system, on the head (2) of the screw (1),
- determining a length-measuring value of a pocket bore (5) of the screw (1) running along the screw axis,
- or determining a distance-measuring value of a core in a core bore of the screw (1) running along the screw axis,
- whereby the length-measuring value is determined from the direction of the screw head (2) and at a point in time when no change in the length of the screw shank has yet taken place,
- or whereby the distance-measuring value is determined from the direction of the screw head (2) relative to the front face of the core and at a point in time when no change in the length of the screw shank has yet taken place,
- continuous recording of the current length- or distance- measuring values during a current screwing-in process, and
- continuous comparison of the recorded length- or distance- measuring values and their changes occurring during the current screwing-in process, with predetermined stored data, whereby
- according to predetermined criteria it is ascertained whether the screwing-in process is going on according to planned function, and when the screwing-in process is to be terminated, **characterised in that**
- the length-measuring value or the distance-measuring value is determined by optical measuring, whereby a measuring light beam (11) emitted by a light source is reflected on the bore base (6) of the pocket bore (5) or on the front face of the core, and the reflected beam (12) is recorded by a beam recording unit and the displacement of the bore base (6) or the displacement of the front face of the core is determined by an evaluation unit.

6. A process as claimed in claim 5, **characterised in that** production of the screw connection is monitored in addition by measuring of the angle of rotation and/or the torque.

7. A process as claimed in claims 5 or 6, **characterised in that** the screw temperature is measured to compensate temperature disturbance variables.

## Revendications

1. Un dispositif pour la fabrication d'une connexion à vis, dans laquelle, au moyen d'une vis (1) comprenant un alésage borgne (5) ou un carottage et vissée à l'aide d'un système de vissage, deux éléments de tôle (7, 8) sont serrés ensemble avec une force de précontrainte prédéterminée, ce qui entraîne une variation de longueur au niveau de la tige de vis, ce dispositif comprenant :
- un dispositif de mesure qui balaie en permanence la surface de base (6) de l'alésage borgne (5) ou la face avant du corps de vis, les valeurs mesurées afférentes à la longueur courante de l'alésage borgne (5) ou du carottage pouvant faire l'objet d'une saisie continue,
- une unité électronique de conversion et traitement des données qui transforme les valeurs mesurées en signaux électriques et poursuit leur traitement et
- un dispositif de commande qui pilote un système de vissage (9) en fonction des valeurs mesurées et des valeurs de référence prédéterminées, **caractérisé par le fait que**
- le dispositif de mesure est conçu de façon telle qu'il génère un faisceau lumineux de mesure (11) orienté sur la surface de base (6) de l'alésage borgne (5) ou sur la face avant du corps de vis et étant réfléchi par la surface de base (6) ou la face avant, celui-ci pouvant être détecté par le dispositif de mesure, l'unité de conversion et de traitement pouvant générer des signaux électriques de mesure qui sont acheminés vers le dispositif de commande.

2. Un dispositif selon la revendication 1, **caractérisé par le fait qu**'il est doté d'une baguette pouvant se déplacer automatiquement dans son extension longitudinale, qui peut être amenée dans une position de mesure et dans une position de repos, sachant qu'un capteur optique actif destiné à mesurer la longueur ou la distance est positionné à l'extrémité avant de la baguette et que la baguette dotée du capteur est dimensionnée de façon qu'elle puisse, dans la position de mesure, maintenir le capteur à une distance prédéterminée de la surface de mesure, celle-ci correspondant à l'étendue de mesure du système de mesure.

3. Un dispositif selon l'une des revendications 1 à 2 **caractérisé par le fait qu**'il est doté d'un deuxième système de mesure se trouvant dans un rapport de position déterminé vis-à-vis du premier système de mesure, le deuxième système de mesure étant celui à l'aide duquel on enregistre tout décalage positionnel que le premier système de mesure subit par rapport à la tête de vis (2).

4. Un dispositif selon au moins l'une des revendications 1 à 3 **caractérisé par le fait que** le dispositif de mesure est aménagé à l'intérieur de l'outil de serrage d'une visseuse manuelle.

5. Un dispositif pour la fabrication d'une connexion à vis, dans laquelle, au moyen d'une vis (1) serrée à l'aide d'un système de vissage (9), deux éléments de tôle (7, 8) sont serrés ensemble avec une force de précontrainte prédéterminée, ce qui entraîne une variation de longueur au niveau de la tige de vis, la procédure à suivre comprenant les cinq étapes suivantes :
- placer le système de vissage (9), présentant un système de mesure, sur la tête (2) de la vis (1),
- déterminer une mesure de longueur d'un alésage borgne (5) de la vis (1), parallèle à l'axe de la vis, ou
- une mesure de distance d'un carottage de la vis (1), parallèle à l'axe de la vis,
- sachant que la mesure de longueur est déterminée à partir de la direction de la tête de vis (2) et à un moment où une variation de longueur de la tige de vis n'est pas encore intervenue ou
- que la mesure de distance est déterminée à partir de la direction de la tête de vis (2), par rapport à la face avant du corps de vis et que la mesure est effectuée à un moment où une variation de longueur de la tige de vis n'est pas encore intervenue,
- saisie continue des mesures courantes de longueur ou, selon le cas, de distance pendant l'opération de serrage en cours et
- comparaison permanente, avec des données prédéterminées, des variations saisies, survenant pendant l'opération de serrage en cours, au niveau des mesures de longueur ou, selon le cas, de distance,
- un certain nombre de critères prédéterminés permettant de vérifier si l'opération de serrage s'effectue conformément à la fonctionnalité prévue et de définir à quel moment l'opération de serrage doit être terminée, **caractérisée par le fait que**
- la mesure de longueur ou la mesure de distance est déterminée par mesure optique, un faisceau lumineux de mesure (11), émis par une source de lumière, étant réfléchi sur le fond d'alésage (6) de l'alésage borgne (5) ou sur la face avant du corps de vis, et le faisceau lumineux (12) étant enregistré par un dispositif de détection et un poste d'évaluation déterminant le décalage du fond d'alésage (6) ou de la face avant du corps de vis.

6. Un procédé selon la revendication 5, **caractérisé par le fait que** la fabrication de la connexion à vis est surveillée additionnellement par la mesure de l'angle de rotation ou/et par le couple.

7. Un procédé selon les revendications 5 à 6, **caractérisé par le fait qu**'il est effectué une mesure de la température de la vis afin de compenser les perturbations au niveau de la température.
